# EUROPEAN PATENT APPLICATION

(11) **EP 3 468 095 A1**
(43) Date of publication of application: **10.04.2019**
(21) Application number: 17195125.4
(22) Date of filing: 06.10.2017
(51) Int. Cl.: H04L 9/32

(54) **TRANSACTION SELECTION DEVICE FOR SELECTING BLOCKCHAIN TRANSACTIONS**

(71) Applicant: Siemens Aktiengesellschaft, 80333 München (DE)
(72) Inventor: Falk, Rainer, 85586 Poing (DE)

(57) **Abstract**

An object of the present application is to provide transaction selection device adapted to select at least one transaction from a plurality of non-confirmed transactions for creating a new blockchain block of a blockchain. According to this, the transaction selection device comprises a receiving unit, which is adapted to receive the plurality of non-confirmed transactions. The transaction selection device further comprises a classification unit, which is adapted to classify the plurality of non-confirmed transactions based on at least one criterion. The transaction selection device further comprises a selection unit, which is adapted to select the at least one transaction from the plurality of non-confirmed transactions based on the classification of the classification unit. Hereby, the selection unit is adapted to provide the at least one non-confirmed transaction for the creation of the new blockchain block of a blockchain.

## Description

### TECHNICAL FIELD

Various embodiments of the invention relate to selecting at least one transaction from a plurality of non-confirmed transactions based on a classification of the plurality of non-confirmed transactions.

### BACKGROUND

Blockchain based platforms may be used by a plurality of participants as well as based on a plurality of different applications. Any of them may be based on different requirements and may e.g. include various contractual agreements as well as individual relevancies attributed to the respective participants of the blockchain platform.

### SUMMARY

Therefore, there is a need to provide a blockchain environment, which is adapted to handle various types of transactions in a different manner.

It is an object to provide a transaction selection device, a blockchain system and a respective method, which are adapted to handle transactions in a blockchain environment individually based on the respective requirements attributed to each transaction.

A device, a system and a method according to the independent claims are provided. Further embodiments are defined in the dependent claims.

According to an embodiment, a transaction selection device adapted to select at least one transaction from a plurality of non-confirmed transactions for creating a new blockchain block of a blockchain is disclosed. The transaction selection device comprises a receiving unit, which is adapted to receive the plurality of non-confirmed transactions. The transaction selection device further comprises a classification unit, which is adapted to classify the plurality of non-confirmed transactions based on at least one criterion. The transaction selection device further comprises a selection unit, which is adapted to select the at least one transaction from the plurality of non-confirmed transactions based on the classification of the classification unit. Hereby, the number of transactions selected by the selection unit is smaller than the plurality of non-confirmed transactions. Further, the selection unit is adapted to provide the at least one non-confirmed transaction for the creation of the new blockchain block of a blockchain.

A transaction that has not been selected may remain a part of the plurality of non-confirmed transactions, so that it can be selected to be included in a later blockchain block. The classification and selection may be performed in addition to the verification whether a transaction is valid. The purpose of various example techniques is to select a subset of valid non-confirmed transactions to be included in a block of the blockchain. The classification and selection of a transaction can be performed before the validity of a transaction is verified, or after the validity of the transaction has been verified. For example, it may be possible to discard invalid transactions; while transactions not selected due to the classification may not be discarded, but rather queued and/or otherwise stored.

According to an embodiment, a transaction selection device adapted to select at least one transaction from a plurality of non-confirmed transactions for creating a new blockchain block of a blockchain is disclosed. The transaction selection device comprises a control circuitry adapted to receive the plurality of non-confirmed transactions. The control circuitry is also adapted to classify the plurality of non-confirmed transactions based on at least one criterion. The control circuitry is further adapted to select the at least one transaction from the plurality of non-confirmed transactions based on the classification of the classification unit. Hereby, the number of transactions selected by the selection unit is smaller than the plurality of non-confirmed transactions. Further, the control circuitry is adapted to provide the at least one non-confirmed transaction for the creation of the new blockchain block of a blockchain.

Such an approach may be based on the finding that such a device is adapted to define a subgroup of the available number of non-confirmed transactions for the creation of a new blockchain block. This may be advantageous, since the number of transactions included in each block, the processing effort attributed to any block as well as the expenditure of time corresponding to any block may thereby be controlled in an improved manner. Furthermore, the transactions to be included in the subgroup may be selected depending on their respective classification, so that, e.g., more urgent or more important transactions are included with higher priority in the next block of the blockchain, i.e., the new blockchain block. Thereby, the transaction selection device is adapted to enable an improved control of the execution of various transactions.

According to another embodiment, a method for selecting at least one transaction from a plurality of non-confirmed transactions for creating a new blockchain block of a blockchain is disclosed. The method may be performed by a transaction selection device. The method comprises receiving the plurality of non-confirmed transactions, e.g., by a receiving unit. The method further comprises classifying the plurality of non-confirmed transactions based on at least one criterion, e.g., by a classification unit. The method further comprises selecting, e.g., by a selection unit, the at least one transaction from the plurality of non-confirmed transactions based on the classification of the classification unit. Hereby, the number of transactions selected is smaller than the plurality of non-confirmed transactions. Further, the at least one non-confirmed transaction for the creation of the new blockchain block of a blockchain is provided by said selecting.

Such an approach may be based on the finding that such a method defines a subgroup of the available number of non-confirmed transactions for the creation of a new blockchain block. This may be advantageoous, since the number of transactions included in each block, the processing effort attributed to any block as well as the expenditure of time corresponding to any block is thereby controlled. Furthermore, the transactions to be included in the subgroup may be selected depending on their respective classification, so that more urgent or more important transactions are included with higher priority in the next block of the blockchain, i.e., the new blockchain block. Thereby, the method enables an improved control of the execution of various transactions.

According to another embodiment, a blockchain system is disclosed. The blockchain system comprises a blockchain network, at least one blockchain node connected to the blockchain network and a transaction selection device according to any embodiment outlined herein.

A transaction within the meaning of the present disclosure may refer to any data transition, in which a blockchain environment is at least partly involved. The transaction may correspond to any action originating from any blockchain node. Various transactions may be included in one new blockchain block. The data transition may be security-relevant. Thereby, it may be possible to protect an information content of the data transition relating, e.g., to contractual agreements, smart contracts, etc..

A non-confirmed transaction within the meaning of the present disclosure may refer to any available transaction, which has not been included in any blockchain block, yet.

A blockchain within the meaning of the present disclosure may refer to any database implemented in a network, which is at least partly based on the blockchain technique. The blockchain may comprise a plurality of blocks comprising data related to transactions which may relate Smart Contracts. Chaining of different blocks may be implemented by cryptographic hash values stored in each block, wherein each hash value may refer to data of a previous block.

A new blockchain block within the meaning of the present disclosure may refer to an entity which may be chained to a blockchain and which has not been chained to the respective blockchain, yet. The new blockchain block may be established based on an arbitrary amount of transactions, which have not been confirmed yet.

In an embodiment of the transaction selection device, the at least one criterion refers to a transaction specific due date.

Thereby, the transaction selection device may additionally take an urgency of the respective transaction into account and may therefore secure to execute any transaction within the required time limit.

In another embodiment of the transaction selection device, the at least one criterion refers to a computing complexity of the respective transaction.

Thereby, the creation of new blockchain blocks, which substantially comprise a uniform size and processing time, respectively, may be achieved. Thus, time-control of executing blockchain transactions may further be improved.

In another embodiment of the transaction selection device, the at least one criterion refers to a priority information attributed to the respective transaction.

Thereby, a particular importance attributed to a transaction by a participant of the blockchain network can be taken into account with respect to the speed of executing such a transaction. As a matter of consequence, an early execution of highly relevant transactions may be secured.

In another embodiment of the transaction selection device, the priority information corresponds to financial expenses for operating the transaction.

Thereby, early execution of highly relevant transactions may be correlated to a raised fee for executing such a transaction. Thus, the device may provide an improved differentiation of the participant's needs and may also optimize the financial benefits achievable by the blockchain platform.

In another embodiment of the transaction selection device, the at least one criterion may be controlled by a user input. The user input may be received via a human-machine interface.

Thereby, the selection of transactions to be executed may be adapted to varying circumstances as well as to variations of a user's needs. User preferences can be taken into account.

In another embodiment of the transaction selection device, the transaction selection device is adapted to be included in a blockchain node.

Thereby, an adaption is provided, which enables a selection mechanism using preferably simple means. In this case, the device is further adapted to enable selection of the transactions for each of the transactions.

In another embodiment of the transaction selection device, the transaction selection device is adapted for operation outside of a blockchain node. In another embodiment of the transaction selection device, the transaction selection device is adapted to operate as a network gatekeeper.

Thereby, when implementing the transaction selection device in a blockchain system, different handling of different blockchain nodes may be realized in that only a portion of the blockchain nodes may be subjected to selection of the transaction selection device. Thereby, such means enable the flexible handling of participants within a blockchain network.

In another embodiment of the transaction selection device, the transaction selection device is further adapted for determining a computing complexity for an operation of the selected at least one transaction, wherein a proof of work effort of the created new blockchain block of a blockchain is adapted to the determined computing complexity.

Thereby, when adapting both of these efforts to each other, a substantially uniform total computing complexity for operating transactions implemented in a new blockchain block can be achieved. Therefore, a uniform blockchain block effort for each block may be achieved, which consequently results in an improved transaction time control.

In another embodiment of the transaction selection device, the classification unit is adapted to classify the plurality of non-confirmed transactions based on a weighting of at least a first criterion and a second criterion. In another embodiment of the transaction selection device, the weighting of at least the first criterion and the second criterion may be controlled by a user input.

Thereby, selection of a subgroup of transactions to be operated may be improvably adapted to current requirements of the blockchain network participants.

In another embodiment of the transaction selection device, the transaction selection device is included in an energy supply system.

Thereby, the transactions selection device may enable the avoidance of single line overloads in an energy supply system.

In another embodiment, the transaction selection device is adapted to select an enhancing blockchain path.

Thereby, an improved flexibility for following-up blockchain paths may be achieved.

In an embodiment of the method, the method is performed by a transaction selection device according to any of the embodiments above.

In another embodiment of the blockchain system, the transaction selection device is implemented in the at least one blockchain node.

In another embodiment of the blockchain system, the transaction selection device is implemented outside the at least one blockchain node and is adapted within the blockchain system to operate as a network gatekeeper.

A computing complexity within the meaning of the present disclosure may refer to any extent of effort that is to be performed by a computing device. The computing complexity may relate to the amount of hardware resources - e.g., in terms of processing power, memory, disc storage - required. This extend of effort may correspond to a time interval during which a corresponding operation may be executed. Such a corresponding operation may refer to a transaction in a blockchain environment.

A priority information within the meaning of the present disclosure may refer to any kind of information enclosed to a data transmission indicating a relevance of this data transmission. Such a data transmission may refer to a transaction initiated in a blockchain environment. Such a relevance may be based on an amount of financial expenses practiced by a network participant, a deadline for completing a corresponding contract, etc..

A blockchain node within the meaning of the present disclosure may refer to an arrangement based on which access to a blockchain environment may be achieved. The blockchain node may refer to an arrangement accessible to a blockchain participant.

A network gatekeeper within the meaning of the present disclosure may refer to any adaption included in a network environment, which is adapted to control a flow of information reaching the network. The network may be a public network. The network may correspond to a blockchain platform. The flow of information may comprise transactions originating from blockchain nodes. The network gatekeeper may implement routing functionality. The network gatekeeper may be a (e.g., exclusive) point-of-entry or point-of-exit of a corresponding network.

An enhancing blockchain path within the meaning of the present disclosure may refer to any data path along which a chain of data blocks is developed. Any of these data blocks may comprise various transactions.

A computer program product comprises program code that may be executed by at least one processor. Executing the program code causes the at least one processor to perform a method for selecting at least one transaction from a plurality of non-confirmed transactions for creating a new blockchain block of a blockchain. The method may be performed by a transaction selection device. The method comprises receiving the plurality of non-confirmed transactions, e.g., by a receiving unit. The method further comprises classifying the plurality of non-confirmed transactions based on at least one criterion, e.g., by a classification unit. The method further comprises selecting, e.g., by a selection unit, the at least one transaction from the plurality of non-confirmed transactions based on the classification of the classification unit. Hereby, the number of transactions selected is smaller than the plurality of non-confirmed transactions. Further, the at least one non-confirmed transaction for the creation of the new blockchain block of a blockchain is provided by said selecting.

A computer program comprises program code that may be executed by at least one processor. Executing the program code causes the at least one processor to perform a method for selecting at least one transaction from a plurality of non-confirmed transactions for creating a new blockchain block of a blockchain. The method may be performed by a transaction selection device. The method comprises receiving the plurality of non-confirmed transactions, e.g., by a receiving unit. The method further comprises classifying the plurality of non-confirmed transactions based on at least one criterion, e.g., by a classification unit. The method further comprises selecting, e.g., by a selection unit, the at least one transaction from the plurality of non-confirmed transactions based on the classification of the classification unit. Hereby, the number of transactions selected is smaller than the plurality of non-confirmed transactions. Further, the at least one non-confirmed transaction for the creation of the new blockchain block of a blockchain is provided by said selecting.

The above summary is merely intended to give a short overview over some features of some embodiments and implementations and is not to be construed as limiting. Other embodiments may comprise other features than the ones explained above.

### BRIEF DESCRIPTION OF THE DRAWINGS

The above and other elements, features, steps and characteristics of the present disclosure will be more apparent from the following detailed description of embodiments with reference to the following figures:
- Figure 1: schematically illustrates a section of a blockchain, which may be assembled in a blockchain environment.
- Figure 2: schematically illustrates a transaction selection device according to various examples.
- Figure 3: schematically illustrates a transaction selection device implemented in a blockchain node according to various examples.
- Figure 4: schematically illustrates a blockchain system comprising transaction selection devices implemented in blockchain nodes according to various examples.
- Figure 5: schematically illustrates a transaction selection device implemented outside a blockchain node according to various examples.
- Figure 6: schematically illustrates a blockchain system comprising a transaction selection device implemented in a network gatekeeper according to various examples.
- Figure 7: represents a flowchart of a method performed by the transaction selection device according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

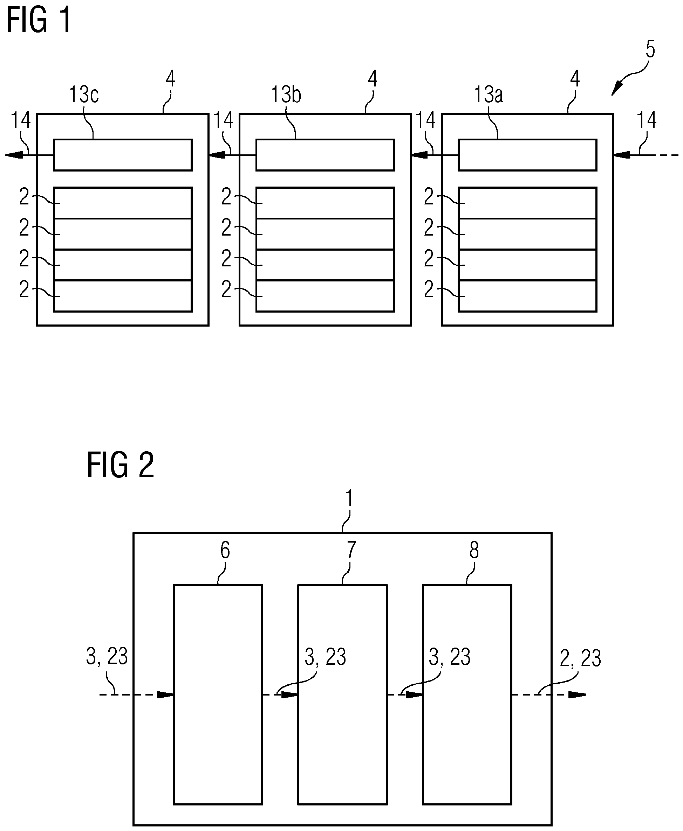

Figure 1 schematically illustrates a section of a blockchain 5, which may be assembled in a blockchain environment.

According to this, such a blockchain 5 may comprise a plurality of blocks 4 connected to each other. In such an assembling, each block 4 may be coupled with two neighboring blocks 4, wherein coupling is - according to Figure 1 - depicted as chain 14. A new block 4 to be included in the blockchain 5 may be assembled at an open end of the chain 14 of the blockchain 5. Each block 4 may comprise a plurality of transactions 2 to be processed. The creation of the chain 14 coupling the blocks 4 to assemble the blockchain 5 may be supported by hash values 13a-13c, each implemented in their respective block 4. Hereby, each hash value 13a-13c may depend on the respective predecessor block 4. Specifically, the respective hash value 13a-13c may be evaluated based on the data of the respective predecessor block 4.

With respect to the transactions 2 implemented in each block 4, the program code may be implemented as a smart contract. The program code may carry information with respect to whether a transaction 2 is admissible. According to this, different business processes may be flexibly realized by a common blockchain infrastructure. Usually, a hash tree, e.g. a Merkle tree or a Patricia tree, may be used for storing the respective hash values in each of the blocks 4.

Figure 2 schematically illustrates a transaction selection device 1 according to various examples. The transaction selection device 1 may be adapted to select at least one transaction 2 from a plurality of non-confirmed transactions 3 for creating a new blockchain block 4 of a blockchain 5. The transaction selection device 1 may be adapted for operation in a blockchain environment, wherein at least one transaction may comprise smart contract program code.

As can be deduced from Figure 2, the transaction selection device may comprise a receiving unit 6. The receiving unit may be adapted to receive the plurality of non-confirmed transactions 3. For this purpose, coupling means 23 may be provided coupling the receiving unit 6 with further means located outside of the transaction selection device 1.

The transaction selection device may further comprise a classification unit 7, which is adapted to classify the plurality of non-confirmed transactions 3 based on at least one criterion. Any arbitrary number of criteria considered for classification is hereby intended. Further, it may also be intended to weight at least a first criterion and a second criterion for classification. In this context, at least one criterion for classification may refer to a transaction specific due date. Further, at least one criterion for classification may refer to a computing complexity of the respective transaction 2. Further, at least one criterion for classification may refer to a priority information attributed to the respective transaction 2. Hereby, such a priority information may correspond to financial expenses for operating the transaction 2. Such a criterion for classification may be modified over time and may further be controlled by a user input. As an example, at least some of the blockchain participants located at specific blockchain nodes 9 may control the at least one criterion by such a user input.

As can also be deduced from Figure 2, the transaction selection device 1 may further comprise a selection unit 8, which is adapted to select the at least one transaction 2 from the plurality of non-confirmed transactions 3 based on the classification of the classification unit. Hereby, any arbitrary number of selected transactions 2 smaller than the number of the plurality of non-confirmed transaction 3 may be intended. This may be referred to as filtering the plurality of non-confirmed transactions. The selection unit 8 may further be adapted to provide the at least one non-confirmed transaction 3 for the creation of the new blockchain block 4 of a blockchain 5. For this purpose, coupling means 23 may be intended coupling the selection 8 with means located outside of the transaction selection device. As an example, such means may refer to a blockchain block creation unit 15.

The transaction selection device 1 may be adapted to receive a plurality of available, non-confirmed transactions 3 and to provide for a selected number of transactions 2, which may be used for the creation of a new blockchain block 4. For doing so, an interaction of the receiving unit 6, the classification unit 7 and the selection unit 8 realized by coupling means 23 may be intended.

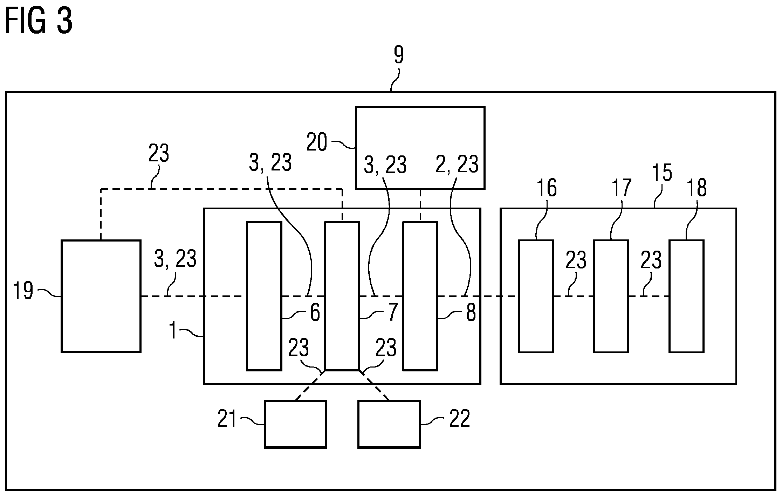

Figure 3 schematically illustrates a transaction selection device 1 implemented in a blockchain node 9 according to various examples. Based on such an implementation of the transaction selection device in the blockchain node 9, the blockchain node 9 may operate as a scheduling blockchain node 9. Such a scheduling blockchain node 9 may implement the transaction selection device 1 according to Figure 1 and may comprise the respective receiving unit 6, the respective classification unit 7 and the respective selection unit 8, wherein these units may interact based on any coupling means 23 and/or may be implemented in hardware, software, or a combination of hardware and software.

The blockchain node 9 may hereby be adapted in that the plurality of non-confirmed transactions 3 may be received from a transaction pool by coupling means 23 and may subsequently be classified by the classification unit 7. The classification may or may not directly be coupled to the transaction pool 19 using any coupling means 23. Further, the blockchain node 9 operating as a scheduling blockchain node 9 may further be adapted in that classification performed by the classification unit 7 may additionally be supported by a service level agreement unit 21 and a classification policy unit 22, which may be coupled to the classification unit 7 using any coupling means 23. In order to perform selection by the selection unit 8 based on a classification performed by the classification unit 7, coupling means 23 may be adapted to couple the classification unit 7 and the selection unit 8. The blockchain node 9 operating as a scheduling blockchain node 9 may further comprise a selection policy unit adapted to support the selection unit 8 by the provision of an intended policy.

The selected at least one transaction 2 selected by the selection unit 8 may then be provided to a blockchain block creation unit, which is adapted to receive the selected at least one transaction 2 and to create a new blockchain block 4 for attachment to a blockchain 5. For doing so, the blockchain block creation unit 15 may comprise a transaction validation unit 16 adapted to validated the selected at least one transaction 2, the block construction unit 17 adapted to construct a new blockchain block 4 based on the validated, selected transactions 2 and a block validation unit 18 adapted to validate the created new blockchain block 4.

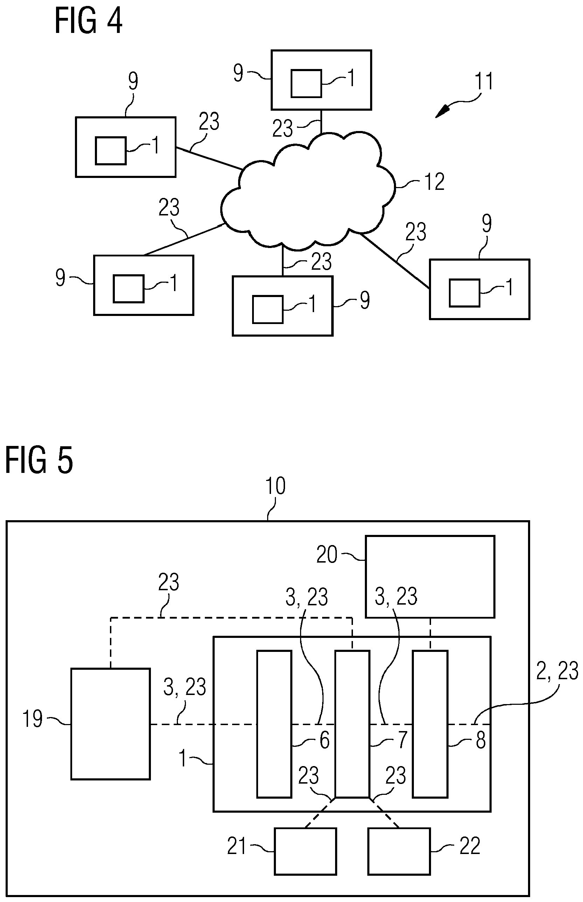

Figure 4 schematically illustrates a blockchain system 11 comprising transaction selection devices 1 implemented in blockchain nodes 9 according to various examples. Thereby, the blockchain nodes 9 may be adapted to operate as scheduling blockchain nodes 9.

The blockchain system 11 may comprise a blockchain network 12, which may comprise a blockchain 5. Assembling of a newly created blockchain block 4 to the blockchain 5 may be performed at the blockchain network 12. The blockchain system 11 may further comprise any arbitrary number of blockchain nodes 9, wherein at least one of these blockchain nodes 9 comprises a transaction selection device 1, thereby operating as a scheduling blockchain node 9. Hereby, each blockchain node 9 operating as a scheduling blockchain node 9 is adapted to create a new blockchain block 5 for a blockchain 4.

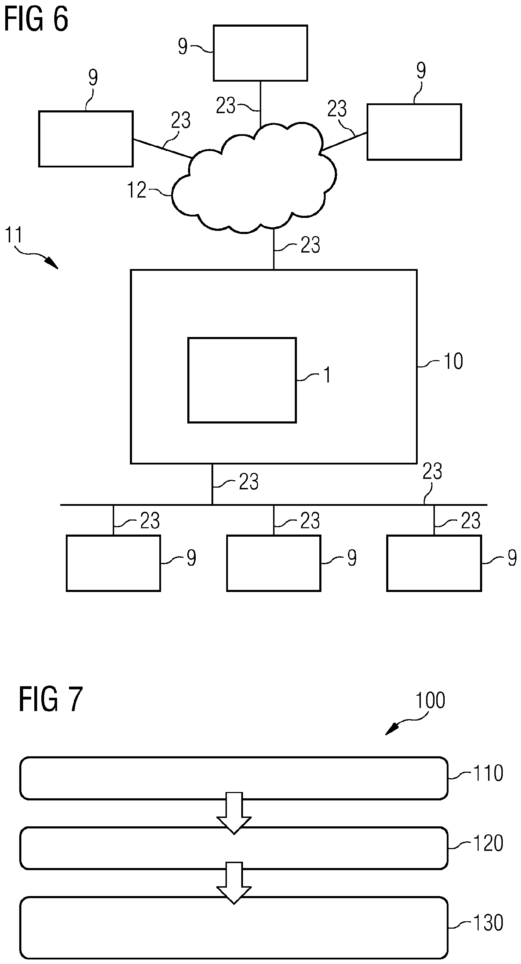

Figure 5 schematically illustrates a transaction selection device 1 implemented outside a blockchain node according to various examples. Such an adaption may operate as a network gatekeeper 10, as explained with respect to Figure7. Hereby, the transaction selection device 1 according to Figure 1 may be implemented. The network gatekeeper 10 may further comprise the transaction 19 and/or the selection policy unit 20 and/or the service level agreement unit 21 and/or the classification policy unit 22 according to Figure 3.

Figure 6 schematically illustrates a blockchain system 11 comprising a transaction selection device 1 implemented in a network gatekeeper 10 according to various examples. Hereby, the network gatekeeper 10 may be directly coupled to the blockchain network 12 using any coupling means 23. According to the blockchain system 11 of Figure 6, it is not intended that any of the blockchain nodes 9 comprises a transaction selection device 1. Thus, these blockchain nodes 9 may be adapted to operate as common blockchain nodes 9.

Based on the blockchain system 11 according to Figure 6, two groups of blockchain nodes 9 may be distinguished. According to this, the first group of blockchain nodes 9 located at the top of Figure 6 may have direct access to the blockchain network 12 using any coupling means 23, wherein direct access in between the second group of blockchain nodes 9 located at the bottom of Figure 6 and the blockchain network 12 is avoided by arranging the network gatekeeper 10 in between the coupling of the blockchain network 12 and this group of blockchain nodes 9. Therefore and according to the blockchain system 11 of Figure 6, a system is provided, wherein non-confirmed transactions 3 originating from the first group of blockchain nodes 9 depicted above are not selected by a transaction selection device 1 and wherein non-confirmed transactions 3 originating from the second group of blockchain nodes 9 depicted below are selected by a transaction selection device 1 implemented in the network gatekeeper 10.

According to further embodiments (not depicted), the transaction selection device 1 may be included in an energy supply system.

Figure 7 represents a flowchart of a method 100 for selecting at least one transaction 2 from a plurality of non-confirmed transactions 3 for creating a new blockchain block 4 of a block 5. According to this, the method 100 may be performed by a transaction selection device 1 based on any of the embodiments outlined above.

At 110, the plurality of non-confirmed transactions 3 may be received by a receiving unit 6.

Subsequently at 120, the plurality of non-confirmed transactions 3 may be classified based on at least one criterion by a classification unit 7.

Subsequently at 130, the at least one transaction 2 may be selected, by a selection unit 8, from the plurality of non-confirmed transactions 3 based on the classification of the classification unit 7. Hereby, the number of selected transactions 2 may be smaller than the plurality of non-confirmed transactions 3. Further, the at least one non-confirmed transaction 3 for the creation of the new blockchain block 4 of a blockchain 5 may be provided by the selection unit 8.

Summarizing, above various examples have been described in which a filtering of non-confirmed transactions becomes possible when creating a new blockchain block. Such techniques may be employed in various use cases, including transactions, which include information pertaining to contractual agreements or operational agreements. Examples include energy supply systems where transaction selection devices 1 are implemented in a plurality of different lines, in order to avoid any overload behavior of these lines. In such a case, the transaction selection device 1 may use load information of different lines, in order to classify the respective transactions associated to a specific line.

## Claims

1. A transaction selection device (1) adapted to select at least one transaction (2) from a plurality of non-confirmed transactions (3) for creating a new blockchain block (4) of a blockchain (5), comprising:
a receiving unit (6), adapted to receive the plurality of non-confirmed transactions (3);
a classification unit (7), adapted to classify the plurality of non-confirmed transactions (3) based on at least one criterion; and
a selection unit (8), adapted to select the at least one transaction (2) from the plurality of non-confirmed transactions (3) based on the classification of the classification unit (7), the number of transactions (2) selected by the selection unit (8) is smaller than the plurality of non-confirmed transactions (3),
wherein the selection unit (8) is adapted to provide the at least one non-confirmed transaction (3) for the creation of the new blockchain block (4) of a blockchain (5).

2. The transaction selection device (1) according to claim 1, wherein the at least one criterion refers to a transaction specific due date.

3. The transaction selection device (1) according to any of claims 1 and 2, wherein the at least one criterion refers to a computing complexity of the respective transaction (2).

4. The transaction selection device (1) according to any of the preceding claims, wherein the at least one criterion refers to a priority information attributed to the respective transaction (2).

5. The transaction selection device (1) according to claim 4, wherein the priority information corresponds to financial expenses for operating the transaction (2).

6. The transaction selection device (1) according to any of the preceding claims, wherein the at least one criterion is controlled by a user input.

7. The transaction selection device (1) according to any of the preceding claims, further adapted to
determine a computing complexity for an operation of the selected at least one transaction (2),
wherein a proof of work effort of the created new blockchain block (4) of a blockchain (5) is adapted to the determined computing complexity.

8. The transaction selection device (1) according to any of the preceding claims, wherein the classification unit (7) is adapted to classify the plurality of non-confirmed transactions (3) based on a weighting of at least a first criterion and a second criterion.

9. The transaction selection device (1) according to claim 8, wherein the weighting of at least the first criterion and the second criterion is controlled by a user input.

10. The transaction selection device (1) according to any of the preceding claims, which is adapted for operation in an energy supply system.

11. A blockchain system (11), comprising
a blockchain network (12);
at least one blockchain node (9) connected to the blockchain network (12); and
a transaction selection device (1) according to any of the preceding claims.

12. The blockchain system (11) according to claim 11, wherein the transaction selection device (1) is implemented in the at least one blockchain node (9).

13. The blockchain system (11) according to claim 12, wherein the transaction selection device (1) is implemented outside the at least one blockchain node (9) and is adapted within the blockchain system (11) to operate as a network gatekeeper (10).

14. A method (100) for selecting at least one transaction (2) from a plurality of non-confirmed transactions (3) for creating a new blockchain block (4) of a blockchain (5), the method (100) comprising:
Receiving (110) the plurality of non-confirmed transactions (3);
Classifying (120) the plurality of non-confirmed transactions (3) based on at least one criterion; and
Selecting (130) the at least one transaction (2) from the plurality of non-confirmed transactions (3) based on the classification, the number of transactions (2) selected by the selection unit (8) is smaller than the plurality of non-confirmed transactions (3),
wherein the at least one non-confirmed transaction (3) for the creation of the new blockchain block (4) of a blockchain (5) is provided by said selecting.

15. The method (100) of claim 14, which is performed by a transaction selection device (1) according to any of claims 1 to 10.
